# FASCICULE DE BREVET EUROPEEN

(11) **EP 2 580 037 B1**
(45) Date de publication et mention de la délivrance du brevet: **06.08.2014**
(21) Numéro de dépôt: 11731291.8
(22) Date de dépôt: 14.06.2011
(51) Int. Cl.: B29B 7/18, B29B 7/26

(54) **INSTALLATION ET PROCEDE DE SYNCHRONISATION D'UN MELANGEUR INTERNE**
AUSRÜSTUNG UND VERFAHREN ZUR SYNCHRONISIERUNG EINES INTERNEN MISCHERS
EQUIPMENT AND METHOD FOR SYNCHRONIZING AN INTERNAL MIXER

(30) Priorité: 14.06.2010 FR 1054678
(43) Date de publication de la demande: 17.04.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LETOCART, Arnaud, F-63040 Clermont-Ferrand Cedex 9 (FR); CROSNIER, Gérard, F-63040 Clermont-Ferrand Cedex 9 (FR)
(74) Mandataire: Lasson, Cédric Y. M.
(86) Numéro de dépôt international: PCT/EP2011/059775
(87) Numéro de publication internationale: WO 2011/157677

(56) Documents cités:
- EP-A1- 1 854 531
- WO-A1-96/35507
- GB-A- 2 173 414
- US-A- 5 492 403

## Description

La présente invention concerne un procédé et une installation pour la fabrication d'une masse de gomme.

Cette masse de gomme est notamment destinée à être utilisée pour la fabrication de pneumatiques.

On connaît dans l'état de la technique une installation de fabrication d'une masse de gomme comprenant une cuve de mélangeage de la masse.

La cuve comprend une ouverture de chargement de la cuve, une ouverture de sortie de la masse de gomme et une porte d'obturation de l'ouverture de sortie. Cette porte est mobile en rotation entre une position d'obturation de l'ouverture de sortie et une position de dégagement de cette ouverture.

La cuve comprend également des moyens mécaniques rotatifs de mélangeage tels que des rotors de mélangeage montés rotatifs autour d'axes sensiblement parallèles à l'axe de la porte. La cuve comporte aussi une surface de fermeture de la cuve destinée à coopérer avec une surface complémentaire de fermeture de la porte dans la position d'obturation de la porte.

Lors de l'ouverture de la porte, un espace se crée entre les surfaces complémentaires de fermeture. Cet espace forme un orifice d'extrusion de la gomme en cours de mélangeage. Sous l'effet de la pression régnant à l'intérieur de la cuve, de la gomme mélangée est extrudée par cet orifice et une couche de gomme se colle sur les surfaces complémentaires de fermeture.

Lorsque la porte est dans sa position de dégagement, la masse de gomme tombe de la cuve. Afin de mélanger une nouvelle masse de gomme, on déplace à nouveau la porte depuis sa position de dégagement dans sa position d'obturation.

Toutefois, à l'issue de plusieurs cycles de déplacement de la porte entre ses positions de dégagement et d'obturation, un amas de gomme formée de différentes couches de gomme extrudée sous pression s'est accumulé sur les surfaces complémentaires de fermeture et empêche la fermeture correcte de la porte.

Un opérateur doit alors nettoyer manuellement ces surfaces afin de décoller l'amas de gomme collé sur ces surfaces. Ce nettoyage est fastidieux et nécessite de stopper l'installation pendant la durée du nettoyage, ce qui perturbe les cadences de production de gomme. De plus, la présence d'un opérateur implique des mesures de sécurité consistant à désactiver temporairement l'installation, ce qui perturbe davantage les cadences de production.

Le document US-A-5 492 403 décrit un procédé selon le préambule de la revendication 1 et une installation selon le préambule de la revendication 3.

L'invention a pour but d'éviter que le nettoyage des surfaces complémentaires de fermeture ne perturbe les cadences de production de la gomme.

A cet effet l'invention a pour objet un procédé de fabrication d'une masse de gomme, dans lequel:
- on mélange la masse de gomme dans une cuve de mélangeage à l'aide de moyens mécaniques;
- puis, on interrompt le mouvement des moyens mécaniques de mélangeage de la masse de gomme ;
- puis, les moyens mécaniques de mélangeage étant à l'arrêt, on ouvre la cuve en déplaçant une porte d'obturation d'une ouverture de sortie de la masse de gomme de la cuve selon une trajectoire d'ouverture entre une position d'obturation de l'ouverture vers une position de dégagement de l'ouverture; les positions d'obturation et de dégagement correspondant aux extrémités de la trajectoire d'ouverture ;
- puis, la cuve étant ouverte, on redémarre le mouvement des moyens mécaniques de mélangeage de la masse de gomme lorsque la porte est dans une position intermédiaire prédéterminée de sa trajectoire entre les positions d'obturation et de dégagement.

Le procédé selon l'invention permet d'éviter le nettoyage des surfaces complémentaires de fermeture de la porte et de la cuve et donc de ne pas perturber le fonctionnement de l'installation. En effet, en interrompant le mélangeage alors que la cuve est fermée, on ne crée aucun espace susceptible de former un orifice d'extrusion permettant le passage de gomme sous pression. Ainsi, aucune couche de gomme n'est susceptible de coller sur les surfaces complémentaires de fermeture de la porte et de la cuve et aucun nettoyage n'est nécessaire afin d'assurer la fermeture correcte de la porte, c'est-à-dire la coopération des surfaces complémentaires de fermeture.

En redémarrant les moyens mécaniques de mélangeage lorsque la porte est dans la position intermédiaire prédéterminée, l'orifice délimité par les surfaces complémentaires de fermeture est suffisamment grand pour supprimer la pression sous laquelle la gomme aurait pu être extrudée. En supprimant tout risque d'extrusion de la gomme sous pression, on extrait la masse de gomme mélangée de la cuve sans laisser s'accumuler de la gomme sur les surfaces complémentaires de fermeture. En outre, en redémarrant les moyens mécaniques de mélangeage lorsque la porte est dans la position intermédiaire prédéterminée, on évite d'attendre que la porte soit dans la position de dégagement pour extraire la masse de gomme mélangée. On effectue donc l'extraction en temps masqué.

Selon d'autres caractéristiques optionnelles du procédé selon l'invention, on déplace la porte depuis sa position d'obturation vers sa position d'ouverture selon un mouvement continu uniforme. Un mouvement continu uniforme correspond à un déplacement de la porte à vitesse constante.

De préférence, la porte étant mobile en rotation autour d'un axe de la porte et la position d'obturation correspondant à un angle d'ouverture de 0°, la position intermédiaire prédéterminée correspond à un angle d'ouverture supérieur ou égal à un angle d'ouverture prédéterminé. En d'autres termes, les moyens mécaniques de mélangeage sont à l'arrêt lorsque l'angle d'ouverture de la porte est inférieur à l'angle d'ouverture prédéterminé et les moyens mécaniques de mélangeage sont redémarrés lorsque l'angle d'ouverture de la porte est supérieur ou égal à l'angle d'ouverture prédéterminé.

L'invention a également pour objet une installation de fabrication d'une masse de gomme comprenant une cuve de mélangeage de la masse de gomme et des moyens de mélangeage de la masse de gomme dans la cuve, l'installation comprenant:
- une ouverture de sortie de la masse de gomme ;
- une porte d'obturation de l'ouverture mobile entre :
   - une position d'obturation de l'ouverture, et
   - une position de dégagement de l'ouverture,
- des moyens de déplacement de la porte et des moyens de synchronisation entre les moyens de déplacement de la porte et les moyens mécaniques de mélangeage, les moyens de synchronisation étant aptes à commander la mise en oeuvre du procédé tel que défini ci-dessus.

Selon d'autres caractéristiques optionnelles de l'installation selon l'invention:
- La porte est mobile en rotation autour d'un axe de la porte.
- La cuve comporte une surface de fermeture de la cuve destinée à coopérer avec une surface complémentaire de fermeture de la porte dans la position d'obturation de la porte. En coopérant l'une avec l'autre, les surfaces sont au contact l'une de l'autre et assurent l'étanchéité de l'ouverture de sortie.

L'invention sera mieux comprise à la lecture de la description qui va suivre, donnée uniquement à titre d'exemple non limitatif et faite en se référant aux dessins dans lesquels :
- la figure 1 est une vue partielle en perspective d'une installation selon l'invention ;
- la figure 2 est une autre vue partielle en perspective de l'installation de la figure 1 ;
- les figures 3 à 6 sont des vues en coupe à plus grande échelle d'une porte de l'installation dans différentes positions ;
- la figure 7 illustre la cinématique de la porte et des moyens de mélangeage de l'installation de la figure 1.

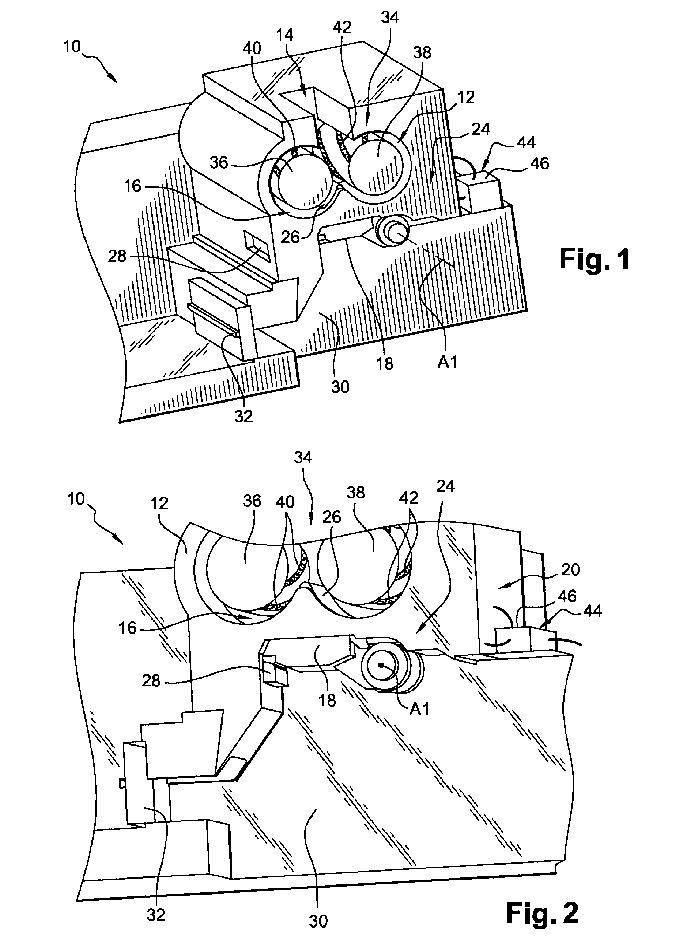

On a représenté sur les figures 1 et 2 une installation désignée par la référence générale 10.

L'installation 10 comprend une cuve 12 de mélangeage d'une masse de gomme. La cuve 12 comprend une ouverture supérieure 14 de chargement de la cuve, une ouverture inférieure 16 de sortie de la masse de gomme et une porte 18 d'obturation de l'ouverture 16.

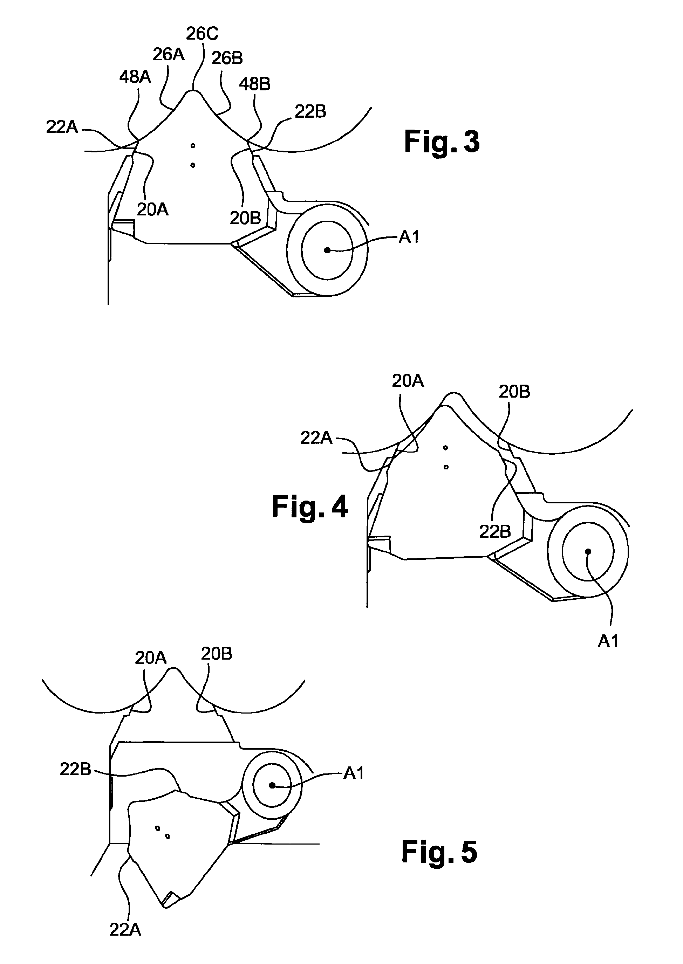

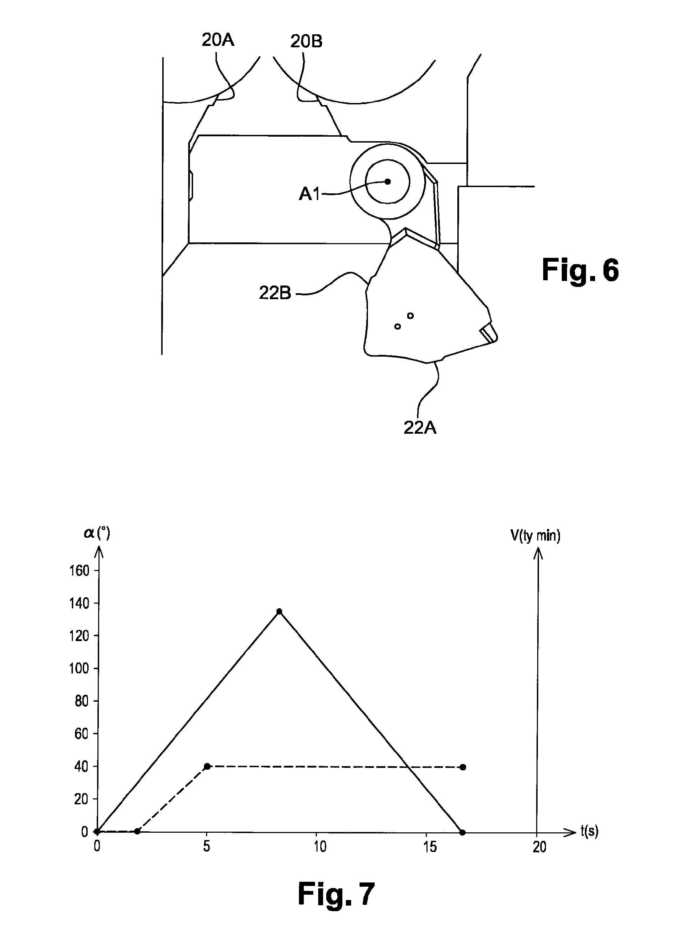

La porte 18 est mobile en rotation autour d'un axe horizontal A1 entre une position d'obturation de l'ouverture 16, représentée à la figure 3, et une position de dégagement de l'ouverture, représentée à la figure 6. La porte s'ouvre vers le bas selon une trajectoire d'ouverture, ici circulaire autour de l'axe A1. Les positions d'obturation et de dégagement correspondent aux extrémités de cette trajectoire d'ouverture.

Comme représenté sur les figures 3 à 6, la cuve 12 comporte des surfaces 20A, 20B de fermeture de la cuve 12 destinée à coopérer avec des surfaces complémentaires 22A, 22B de fermeture de la porte 18 dans la position d'obturation de la porte 18. Chaque surface 20A, 20B, 22A, 22B comporte au moins une partie définie par des génératrices sensiblement parallèles à l'axe A1.

L'installation 10 comprend des moyens motorisés 24 de déplacement de la porte 18, en l'espèce un moteur électrique. En outre, la porte 18 comporte une surface 26, dite interne, destinée à délimiter la cuve en position d'obturation. La surface interne 26 est définie par des génératrices sensiblement parallèles à l'axe A1.

De plus, l'installation 10 comprend des moyens 28 de verrouillage de la porte 18 dans la position d'obturation de la porte 18.

L'installation 10 comprend également un espace 30 de tombée situé en dessous de la cuve 12 permettant la chute de la masse de gomme depuis la cuve 12 lorsque la porte 18 est dans la position de dégagement.

En outre, l'installation 10 comprend une trappe 32 d'accès à l'espace 30.

Enfin, l'installation comprend des moyens mécaniques 34 de mélangeage de la masse de gomme présente dans la cuve 12. En l'espèce, les moyens de mélangeage 34 comprennent deux rotors rotatifs 36, 38 de mélangeage, mobiles en rotation autour d'axes R1, R2 sensiblement parallèles à l'axe A1. Chaque rotor 36, 38 comprend respectivement des ailes de mélangeage 40, 42.

L'installation 10 comprend également des moyens 44 de synchronisation entre les moyens de déplacement 24 de la porte 18 et les moyens de mélangeage 34.

Comme représenté sur les figures 1 et 2, les moyens de synchronisation 44 comprennent une unité de pilotage 46 reliant les moyens de déplacement 24 et les moyens de mélangeage 34.

En référence à la figure 5, la surface interne 26 de la porte 18 présente deux portions concaves 26A, 26B reliées entre elles par une portion convexe 26C lui donnant la forme d'une selle. Chaque portion 26A, 26B comporte respectivement un bord d'extrémité 48A, 48B délimitant la surface 26.

L'installation 10 permet de fabriquer une masse de gomme conformément au procédé de fabrication dont on décrira ci-dessous les principales étapes liées à l'invention en références aux figures 3 à 7.

On a représenté sur la figure 7 les variations de l'angle α (en degrés) d'ouverture de la porte 18 par rapport à la position d'obturation (trait plein) et les variations de la vitesse V (en tours par minute) des rotors 36, 38 (traits pointillés) en fonction du temps t (en secondes) lors d'un cycle de déplacement de la porte 18 depuis sa position d'obturation jusque dans sa position de dégagement et depuis sa position de dégagement jusque dans la position d'obturation. Au cours du déplacement de la porte 18, on synchronise le déplacement de la porte 18 et les moyens de mélangeage 34 grâce aux moyens de synchronisation 44.

Tout d'abord, on charge, par l'ouverture 14, la cuve 12 avec les constituants destinés à former la masse de gomme. Puis, on mélange ces constituants dans la cuve 12 au moyen des rotors 36, 38.

On a représenté sur la figure 3, la porte 18 dans la position d'obturation au temps t=0s. Comme illustré sur la figure 7, à cet instant, on interrompt le mélangeage de la masse de gomme en interrompant le fonctionnement des moyens de mélangeage 34.

Puis, le mélangeage étant interrompu, on ouvre la cuve. En l'espèce, on déplace la porte 18 depuis sa position d'obturation, illustrée à la figure 3, vers sa position d'ouverture, illustrée à la figure 6. On déplace la porte 18 selon un mouvement continu uniforme. En variante, le mouvement pourra être non uniforme.

On a représenté sur la figure 4, la porte 18 à l'instant t=1s dans une première position intermédiaire prédéterminée de sa trajectoire entre les positions d'obturation et de dégagement. Pour arriver à cette position, on a fait tourner la porte d'un angle d'ouverture de 17° depuis sa position d'obturation.

On a représenté sur la figure 5, la porte 18 à l'instant t=2s dans une deuxième position intermédiaire prédéterminée de sa trajectoire entre les positions d'obturation et de dégagement. Pour arriver à cette deuxième position intermédiaire, on a fait tourner la porte d'un angle d'ouverture supérieur à 17°, ici environ 30° depuis sa position d'obturation.

Puis, une fois la deuxième position intermédiaire prédéterminée atteinte, on extrait la masse de gomme hors de la cuve 12. Pour ce faire, on redémarre le fonctionnement des moyens de mélangeage 34, ici la rotation des rotors 36, 38 selon un mouvement uniformément accéléré entre les instant t=2s et t=5s comme illustré sur la figure 7. A l'instant t=7s, la vitesse de rotation des rotors 36, 38 devient constante jusqu'à l'instant t=17,5s. Ainsi, on extrait la masse de gomme sans provoquer son extrusion par les orifices délimités respectivement par les surfaces complémentaires de fermeture 20A, 22A et 20B, 22B.

Le redémarrage des moyens de mélangeage 34 a pour effet de faire chuter la masse de gomme présente dans la cuve 12 dans l'espace de tombée 30.

On a représenté sur la figure 6, la porte dans sa position de dégagement à l'instant t=8,5s. Pour arriver à cette position de dégagement, on a fait tourner la porte d'un angle environ égal à 135° depuis sa position d'obturation.

Puis, entre les instants t=8,5s et t=17,5s, on déplace la porte 18 depuis sa position de dégagement jusque dans sa position d'obturation. Pendant ce déplacement, la vitesse de rotation des rotors 36, 38 reste constante.

L'invention ne se limite pas aux modes de réalisation précédemment décrits.

En effet, les moyens de mélangeage pourront être différents de rotors. De même, la porte pourra présenter une forme différente de celle d'une selle.

En effet, les trajectoires de la surface interne pourront être différentes d'une simple rotation autour d'un axe. Ainsi, la porte pourra, par exemple, présenter une trajectoire résultant de la combinaison, successive ou simultanée :
- de plusieurs rotations autour d'axes de rotation distincts, ou
- d'une translation et d'une rotation, ou
- de plusieurs translations.

## Revendications

1. Procédé de fabrication d'une masse de gomme, où:
- on mélange la masse de gomme dans une cuve (12) de mélangeage à l'aide de moyens mécaniques (34);
- puis on interrompt le mouvement des moyens mécaniques (34) de mélangeage de la masse de gomme ;
- puis, les moyens mécaniques (34) de mélangeage étant à l'arrêt, on ouvre la cuve (12) en déplaçant une porte (18) d'obturation d'une ouverture (16) de sortie de la masse de gomme de la cuve (12) selon une trajectoire d'ouverture entre une position d'obturation de l'ouverture (16) vers une position de dégagement de l'ouverture (16); les positions d'obturation et de dégagement correspondant aux extrémités de la trajectoire d'ouverture;
**caractérisé en ce que**
- puis, la cuve (12) étant ouverte, on redémarre le mouvement des moyens mécaniques (34) de mélangeage de la masse de gomme lorsque la porte (18) est dans une position intermédiaire prédéterminée de sa trajectoire entre les positions d'obturation et de dégagement.

2. Procédé selon la revendication 1, dans lequel on déplace la porte (18) depuis sa position d'obturation vers sa position d'ouverture selon un mouvement continu uniforme.

3. Installation (10) de fabrication d'une masse de gomme comprenant une cuve (12) de mélangeage de la masse de gomme et des moyens (34) de mélangeage de la masse de gomme dans la cuve (12), l'installation (10) comprenant:
- une ouverture (16) de sortie de la masse de gomme ;
- une porte (18) d'obturation de l'ouverture, mobile entre :
- une position d'obturation de l'ouverture (16), et
- une position de dégagement de l'ouverture (16),
**caractérisée en ce qu'**elle comprend des moyens de déplacement (24) de la porte (18) et des moyens (44) de synchronisation entre les moyens de déplacement (24) de la porte (18) et les moyens mécaniques (34) de mélangeage, les moyens de synchronisation étant aptes à commander la mise en oeuvre du procédé selon l'une quelconque des revendications précédentes.

4. Installation (10) selon la revendication 3, dans laquelle la porte (18) est mobile en rotation autour d'un axe (A1) de la porte (18).

5. Installation (10) selon la revendication 3 ou 4, dans laquelle la cuve (12) comporte une surface (20A, 20B) de fermeture de la cuve destinée à coopérer avec une surface complémentaire (22A, 22B) de fermeture de la porte dans la position d'obturation de la porte (18).

## Patentansprüche

1. Verfahren zur Herstellung einer Gummimasse, bei dem:
- die Gummimasse in einer Mischwanne (12) mit Hilfe von mechanischen Mitteln (34) gemischt wird;
- dann die Bewegung der mechanischen Mittel (34) zum Mischen der Gummimasse unterbrochen wird;
- dann, wenn die mechanischen Mittel (34) zum Mischen angehalten sind, die Wanne (12) geöffnet wird, wobei eine Tür (18) zum Verschließen einer Austrittsöffnung (16) für die Gummimasse aus der Wanne (12) entlang einer Öffnungsbahn von einer Verschlussposition der Öffnung (16) in eine Freigabeposition der Öffnung (16) verschoben wird; wobei die Verschluss- und Freigabepositionen den Enden der Öffnungsbahn entsprechen;
**dadurch gekennzeichnet, dass**:
- dann, wenn die Wanne (12) offen ist, die Bewegung der mechanischen Mittel (34) zum Mischen der Gummimasse wieder gestartet wird, wenn sich die Tür (18) in einer vorbestimmten Zwischenposition ihrer Bahn zwischen den Verschluss- und Freigabepositionen befindet.

2. Verfahren nach Anspruch 1, bei dem die Tür (18) von ihrer Verschlussposition in ihre Öffnungsposition in einer einheitlichen kontinuierlichen Bewegung verschoben wird.

3. Anlage (10) zur Herstellung einer Gummimasse, umfassend eine Wanne (12) zum Mischen der Gummimasse und Mittel (34) zum Mischen der Gummimasse in der Wanne (12), wobei die Anlage (10) umfasst:
- eine Austrittsöffnung (16) für die Gummimasse;
- eine Tür (18) zum Verschließen der Öffnung, die beweglich ist zwischen:
- einer Verschlussposition der Öffnung (16), und
- einer Freigabeposition der Öffnung (16), **dadurch gekennzeichnet, dass** sie Mittel (24) zum Verschieben der Tür (18) und Mittel (44) zur Synchronisation zwischen den Mittel (24) zum Verschieben der Tür (18) und den mechanischen Mitteln (34) zum Mischen umfasst, wobei die Synchronisationsmittel geeignet sind, den Einsatz des Verfahrens nach einem der vorhergehenden Ansprüche zu steuern.

4. Anlage (10) nach Anspruch 3, bei der die Tür (18) in Drehung um eine Achse (A1) der Tür (18) beweglich ist.

5. Anlage (10) nach Anspruch 3 oder 4, bei der die Wanne (12) eine Fläche (20A, 20B) zum Verschließen der Wanne umfasst, die dazu bestimmt ist, mit einer komplementären Fläche (22A, 22B) zum Verschließen der Tür in der Verschlussposition der Tür (18) zusammenzuwirken.

## Claims

1. Process for production of a rubber mass where,
- the rubber mass is mixed in a mixing tank (12) by means of mechanical means (34);
- then, the movement of the mechanical means (34) for mixing of the rubber mass is interrupted;
- then, with the mechanical mixing means (34) stopped, the tank (12) is opened by displacing a door (18) for shutting of an opening (16) for discharge of the rubber mass from the tank (12), according to an opening trajectory between a position of shutting of the opening (16), towards a position of release of the opening (16); the positions of shutting and release corresponding to the ends of the opening trajectory;
- **characterized in that** then, with the tank (12) open, the movement of the mechanical means (34) for mixing of the rubber mass is restarted when the door (18) is in a predetermined intermediate position of its trajectory between the positions of shutting and release.

2. Process according to Claim 1, wherein the door (18) is displaced from its shutting position to its opening position according to a regular continuous movement.

3. Installation (10) for production of a rubber mass comprising a tank (12) for mixing of the rubber mass and means (34) for mixing of the rubber mass in the tank (12), the installation (10) comprising:
- an opening (16) for discharge of the rubber mass;
- a door (18) for shutting of the opening which is mobile between:
- a position of shutting of the opening (16), and
- a position of release of the opening (16),
**characterized in that** it comprises means (24) for displacement of the door (18) and means (44) for synchronization between the means (24) for displacement of the door (18) and the mechanical mixing means (34), the means for synchronization being able to control the implementation of the method according to any one of the preceding claims.

4. Installation (10) according to Claim 3, wherein the door (18) is mobile in rotation around an axis (A1) of the door (18).

5. Installation (10) according to Claim 3 or 4, wherein the tank (12) comprises a surface (20A, 20B) for closure of the tank which is designed to co-operate with a complementary surface (22A, 22B) for closure of the door in the shutting position of the door (18).
